# EUROPEAN PATENT APPLICATION

(11) **EP 1 760 287 A1**
(43) Date of publication of application: **07.03.2007**
(21) Application number: 05018673.3
(22) Date of filing: 29.08.2005
(51) Int. Cl.: F01P 11/10, F01P 5/06, B60K 11/04

(54) **An improved cooling system for a motor vehicle**

(71) Applicant: Ford Global Technologies, LLC, Dearborn, MI 48126 (US)
(72) Inventor: Wikeby, Joakim, 423 38 Torslanda (SE); Ljungnerg, Andreas, 41875 Göteborg (SE)
(74) Representative: Bergquist, Kjell Gunnar

(57) **Abstract**

The invention discloses a cooling system (100, 400, 500) for a motor vehicle, comprising a fan (110) with a first and a second main surface, and a fan ring (120) surrounding the fan. The fan defines an outer radius (R) with an uppermost (U) and a lowermost (L) point, and the system also comprises a heat exchange system which includes first component (240) for cooling, arranged adjacent to the fan, and preferably a fan duct (130) which faces one of the main surfaces of the fan. The fan duct extends from an upper edge (140) to a lower edge (150), and the lower edge (150) of the fan duct is located on or below the level of the lowermost point (L) in the fan radius. The distance from the lower edge (150) of the fan duct to the upper edge (140) is equal to or less than 80% of the diameter of the fan.

## Description

### TECHNICAL FIELD

The present invention discloses a cooling system for the engine compartment of a motor vehicle, and comprises a fan with a first and a second main surface and a fan ring surrounding the fan. The fan, when rotating, defines an outer diameter with an uppermost and a lowermost point, and the system also comprises heat exchange system to be cooled. The heat exchange system normally includes at least a first component to be cooled, which first component is arranged adjacent to one of said main surfaces of the fan. The system may also comprise a fan duct with a first main surface which faces one of the main surfaces of the fan. The first main surface of the fan duct extends from an upper edge to a lower edge of the fan duct.

### BACKGROUND ART

Traditionally, in the engine compartment of a motor vehicle there is arranged a cooling system. This system will usually comprise a fan and a heat exchange package including one or several components to be cooled, one of which components will be the radiator, through which cooling liquid passes. The cooling system will usually be arranged in front of the engine of the vehicle, meaning that air which has passed through the cooling system will enter the engine compartment.

The fact that heated air from the cooling system reaches the engine compartment poses problems, since there may be components in the engine compartment which are sensitive to heat.

### DISCLOSURE OF THE INVENTION

Accordingly, there is a need for a cooling system which would reduce the engine compartment temperature as compared to contemporary systems. This need is addressed by the present invention in that it discloses a cooling system for the engine compartment of a motor vehicle, which comprises a fan with a first and a second main surface, and a fan ring surrounding the fan.

In the system, the fan, when rotating, defines an outer diameter with an uppermost and a lowermost point, and the system also comprises a heat exchange package including at least a first component to be cooled, which first component is arranged adjacent to one of said main surfaces of the fan.

The heat exchange system is arranged to provide a distribution, in a vertical direction of the heat exchange package from the lowermost point of a fan ring to the uppermost point of the fan ring, of heat rejection from the heat exchange package, such that a majority of the heat is rejected in the lower half of the heat exchange package. By providing a distribution of the heat exchange which rejects a majority of the heat at the lower portion of the heat exchange system., it will be possible to eject a large portion of heat out through the bottom of the engine bay and thus reduce the temperature in the upper portion of the engine bay where sensitive components normally are positioned.

In order to realise the arrangement of the heat exchange package so as to provide the desired heat rejection distribution, the heat exchange package may be designed in accordance with the preferred embodiments as disclosed herein. The system of the invention may preferably also comprise a fan duct with a first main surface which faces one of the main surfaces of the fan, and the first main surface of the fan duct extends from an upper edge to a lower edge of the fan duct.

According to a preferred embodiment of the invention, the distance from the lower edge of the fan duct to the upper edge is equal to or less than 80% of the outer diameter of the fan. Suitably, the lower edge of the fan duct is located on or below the level of the lowermost point in the fan radius.

The invention enables lower engine compartment temperatures by concentrating air with higher temperatures at the lower portion of the heat exchange package, and then evacuating said high-temperature air so that it never enters the engine compartment.

The evacuation may preferably be controlled by the presence of the duct, which splits the air in two main directions, one direction into the engine compartment and one direction down into the duct and towards the outside the car. The air entering the engine compartment will be much cooler than the air which is evacuated via the duct.

Typically, in a cooling system in a motor vehicle, the components to be cooled include the engine radiator of the vehicle, through which cooling liquid flows. Other components to be cooled may include, for example, a charge air cooler and a condenser. The component which will typically generate the most heat will be the radiator. Thus, in a system according to the invention, the radiator will be made lower than in conventional systems, suitably in such a way that the top of the radiator essentially coincides with the top of the fan duct's mean vertical level

### BRIEF DESCRIPTION OF THE DRAWINGS

The invention will be described in more detail in the appended drawings, in which
Fig 1 shows a schematic view of a system according to the invention, as seen from inside the engine compartment, and
Fig 2 and 3 show the system of fig 1, with additional components in various combinations, and
Fig 4 shows an alternative embodiment of the system of the invention, and
Fig 5 shows alternative arrangements of components in the system of the invention, and
Fig 6 shows a graph of rejected heat as a function of the vertical position.

Appendix 1, shows schematical drawings of an engine bay, diagrams showing the resulted distribution of heat rejection and figures of obtained reduction of temperature in the upper part of the engine bay.

### EMBODIMENTS

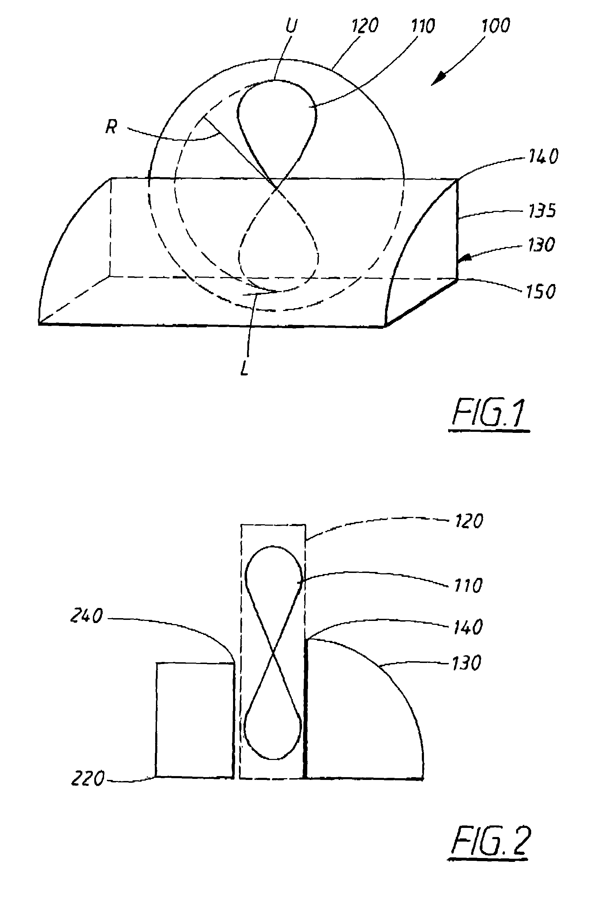

Fig 1 shows a basic embodiment of a cooling system 100 according to the invention, as seen from the engine in a motor vehicle. In order to facilitate the understanding of the invention, those parts of the vehicle which are not included in the system of the invention are not shown in the drawings.

As can be seen in fig 1, the cooling system 100 of the invention comprises a fan 110 with a first and a second main surface. One of the main surfaces of the fan 110 faces into the plane of the paper, corresponding to a direction which is perpendicular to the front of the vehicle, and the other main surface of the fan faces out from the plane of the paper, i.e. towards the engine compartment.

The system also comprises a fan ring 120, so arranged that it surrounds the fan, in order to achieve the desired effect by the fan 110.

In rotation, the fan 110 will define an outer radius R with an uppermost point U and a lowermost point L, so that the distance between the points U and L defines an outer diameter of the fan, equal to 2*R.

The system 100 also comprises a first component to be cooled, which component is not shown in fig 1, but which is arranged adjacent to one of the main surfaces of the fan. As shown in fig 1, the system 100 also comprises a fan duct 130 with a first main surface 135 which faces one of the main surfaces of the fan, and which first main surface 135 of the fan duct 130 extends between an upper edge 140 to a lower edge 150.

As can also be seen in fig 1, the lower edge 150 of the fan duct 130 is suitably located on or below the level of the lowermost point L in the fan's outer diameter. This is the case in a preferred embodiment, but does not necessarily need to be so.

Furthermore, the distance between the lower edge 150 to the upper edge 140 is significantly less than the fan's outer diameter. In a preferred embodiment, the distance from the lower edge of the fan duct to the upper edge is equal to or less than 80% of the outer diameter of the fan. In another preferred embodiment, the distance is 50% or less.

By giving the distance between the edges of the main surface of the fan duct 130 the proportions mentioned, the fan duct 130 won't "cover" the entire fan 110, but only a portion of it. Due to this fact, the air stream coming into the engine room from the fan is split into two streams, the lower of which will be evacuated through the fan duct 130. As will be shown in more detail later, the outlet of the fan duct can be placed below the engine of the vehicle, which is advantageous since it then won't contribute to heating the engine.

In fig 1, a point P on the upper edge 140 of the fan duct 130 is indicated, for reasons which will be shown later in this text.

In fig 2, the system 100 of fig 1 is shown from the side of an imagined vehicle. In this drawing, the vertical extension of the fan duct 130 with respect to the fan 110 can be seen in another perspective. Also shown in fig 2 is the previously mentioned component 220 which is to be cooled. Examples of such components are radiators, charge air coolers, or condensers.

Said component 220 is in this case positioned so that the fan 110 will be closer to the engine of the vehicle than the component, i.e. the fan is positioned between the component and the vehicle's engine.

In the embodiment shown in figs 1 and 2, the upper edges of the component 220 and the fan duct 130 respectively, should be essentially level with each other in order for the fan duct 130 to be able to evacuate the majority of the air which emanates from the component 220. As a consequence of this, the point P on the upper edge 140 of the fan duct which was shown in fig 1 will be level with the upper edge 240 of the first component 220 to be cooled.

However, variations can be accepted in the positions of the upper edges 140, 240. If, for example, the upper edge 140 of the fan duct 130 is arranged higher (the terms "higher" and "lower" here refer to the horizontal plane in an imagined vehicle, so that "lower" will mean closer to the street or road) than the upper edge 240 of the component 220, the performance of the cooling system 100 won't be significantly degraded. A discrepancy in levels where the upper edge of the component 220 is arranged higher than the fan duct 130 can also be accepted, if the discrepancy isn't too large. Suitable values of acceptable discrepancies are up to 50%.

As can also be seen in fig 2, the vertical extension of the component 220 is such that it doesn't correspond to the entire outer diameter of the fan 110, as opposed to more conventional cooling systems in vehicles. This causes a loss of "cooling area", which is suitably compensated for by making the component 220 wider (i.e. in this case, fig 2, in the direction which is "into the paper".) than in conventional arrangements. Thus, the component 220, usually the radiator of the vehicle will be wider and lower than in conventional vehicles, which also has the beneficial side effect of lowering the centre of gravity of the vehicle and of removing the radiator from the "hip zone" with regard to pedestrian crash issues.

Also, when discussing the lower radiator in the system of the invention, it should be pointed out that air which exits the radiator in the direction of the fan can be allowed to have a higher temperature than in conventional designs, since the air will be evacuated through the duct. Thus, if the lower end or outlet of the duct is placed so that it is essentially below all or most components in the engine compartment, the air from the duct will exit below the engine compartment.

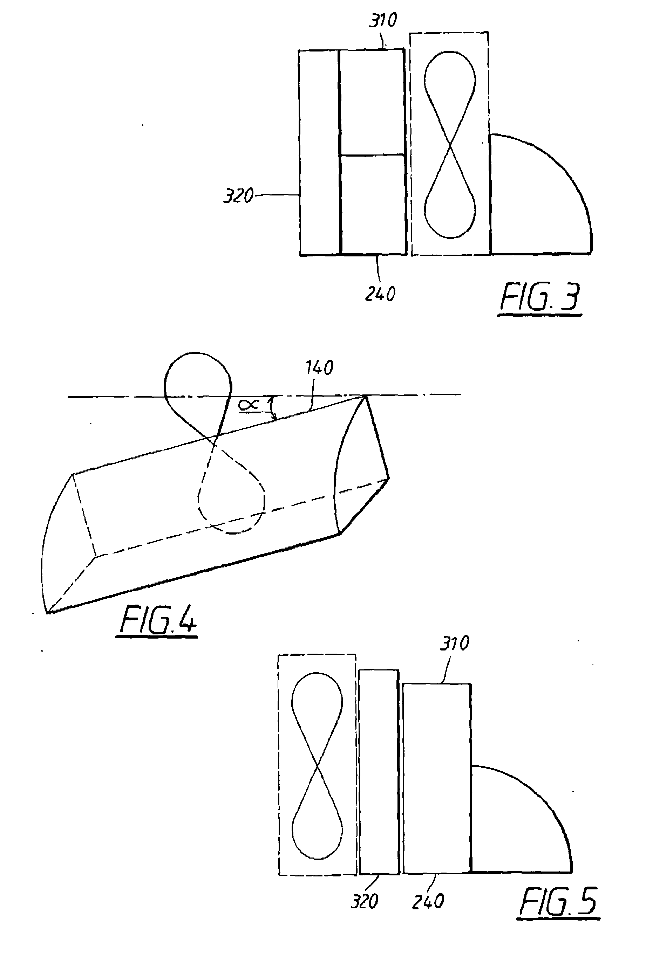

In fig 3, a more complete version of the system 100 is shown. The parts of the system shown in figs 1 and 2 remain the same, but the system has been expanded with two additional components 310, 320, for cooling. Since the first component 240, from now on exemplified as the radiator, has a vertical extension which doesn't use the entire outer diameter of the fan 110, an additional component 310 can be placed above the radiator. An example of a suitable such component 310 is a charge air cooler, but naturally other components can be envisioned, for example in vehicles which do not use a charge air cooler.

An example of a component 320 which can be placed in front (as seen from the fan towards the radiator) of the radiator and charge air cooler is the condenser. In the embodiment shown in fig 3, the vertical extension of the condenser 320 is such that it uses essentially all of the vertical extension or outer radius of the fan 110.

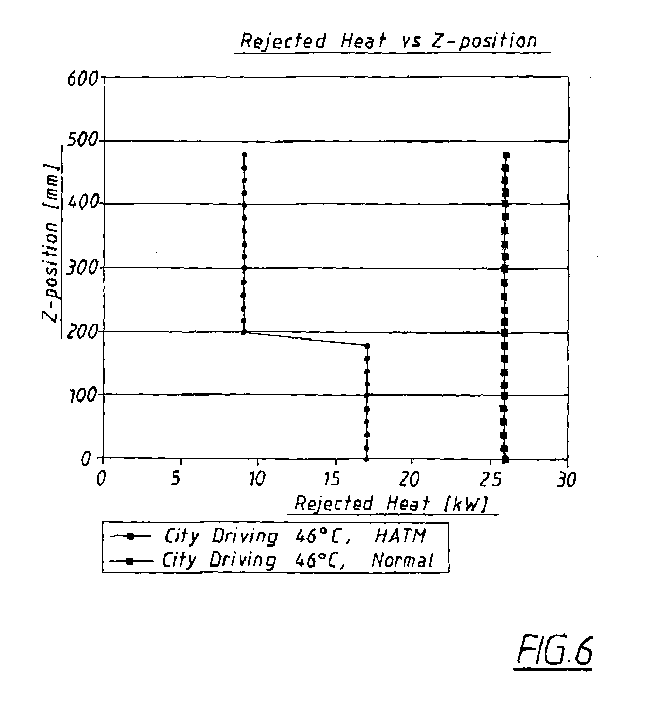

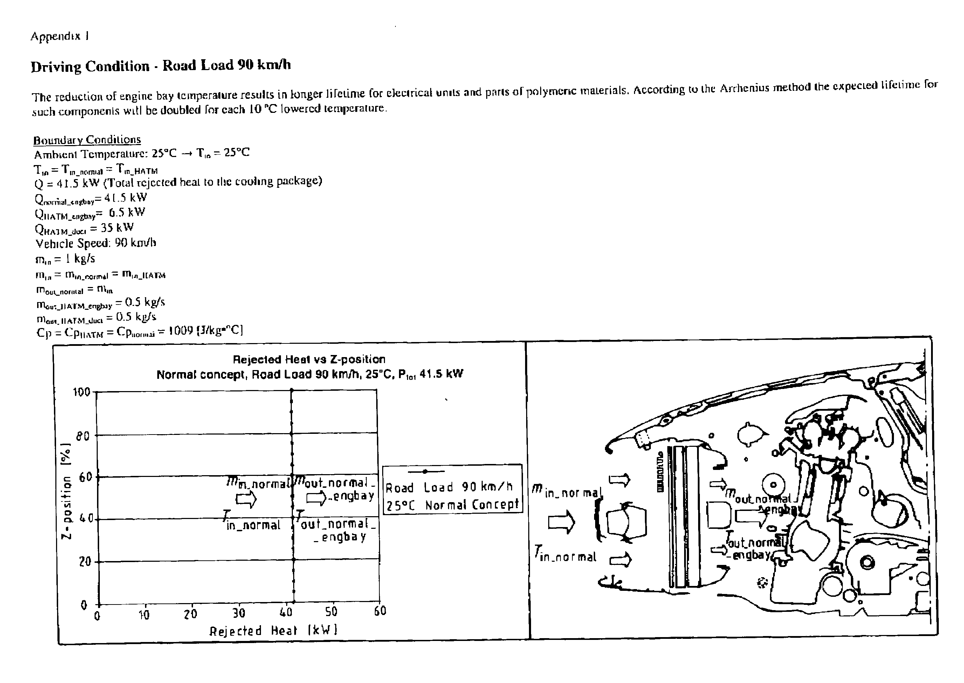

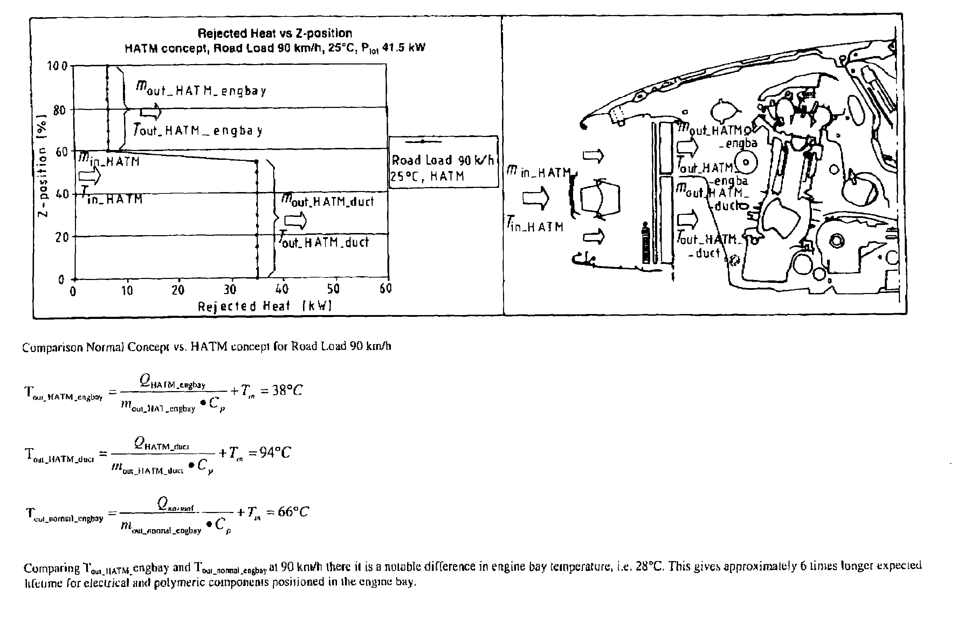

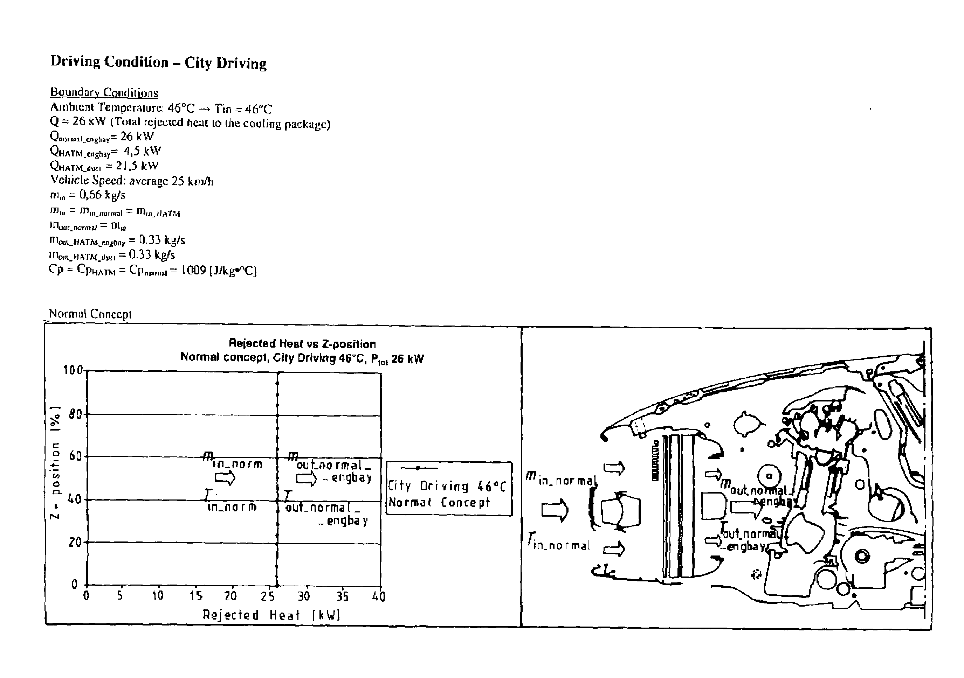

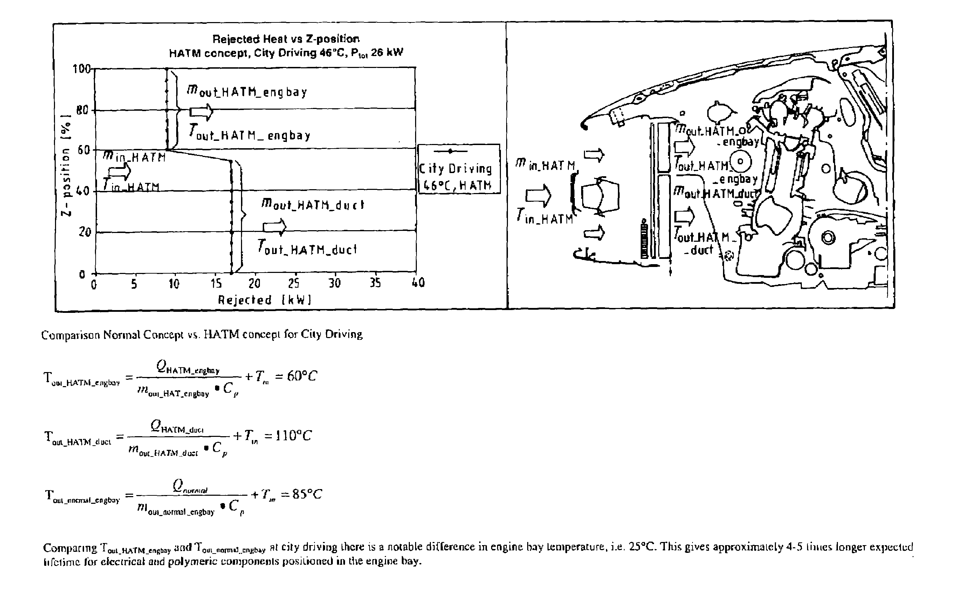

In fig 4, an alternative embodiment 400 of the system 100 of figs 1-3 is shown in the same perspective as the system 100 in fig 1. A major difference between the systems 100 and 400 is that the upper edge 140 of the fan duct 130 is at an oblique angle with respect to an imagined horizontal transversal line in the engine compartment. In other words, the upper edge 140 of the fan duct 130 is slanted with respect to an imagined horizontal transversal line in the engine compartment.

Although the components 240, 310, 320, to be cooled are not shown in fig 4, their respective angles with respect to the same imagined horizontal line suitably won't be altered, as a result of which the upper edge 140 of the fan duct 130 will be oblique compared to the components to be cooled as well.

The previously shown point P on the upper edge 140 of the fan duct is thus still on a level with the upper edge of the component 240.

In a preferred embodiment of the system 400, the slant of the upper edge of the fan duct is such that it coincides with the rotational direction of the fan 110 in the following manner: if the fan rotates counter-clockwise, the slant should be as shown in fig 4. In other words, the fan duct should be slanted in the direction of the fan's rotation.

By means of the slant of the fan duct, the warmest air that is ejected in the direction of the fan's rotation will be kept inside the fan duct and evacuated through it, and the cooler air will be allowed to enter the engine bay.

Fig 5 shows another embodiment 500 of the system of the invention. The embodiment 500 is shown in the same perspective as the system 100 in figs 2 and 3, and is intended to illustrate that as an alternative to what has been shown in the previous embodiments, the component or components 240, 310, 320, to be cooled can be placed in the engine room of the vehicle, between the engine and the fan, thus placing the fan the closest to the grill of the vehicle. This is in contrast to the previous embodiments, in which the fan is placed in the engine room of the vehicle, between the engine and the component to be cooled.

Finally, in order to illustrate an advantage obtained by the invention, fig 6 shows a graph of rejected heat from heat exchangers as a function of the vertical position (z-axis) in the engine bay of a motor vehicle. A graph of heat rejection as a function of z in a conventional vehicle is also shown, in order to illustrate the contrasts.

As can be seen in fig 6, the position and shape of the first component to be cooled, suitably the radiator, causes the majority of the rejected heat to be exhausted at lower z-positions than in a conventional arrangement. Thus, by means of the fan duct of the invention, the majority of the heat can be exhausted below the engine bay, and thus not enter it.

## Claims

1. A cooling system (100, 400, 500) for the engine room of a motor vehicle, comprising a fan (110) with a first and a second main surface, and a fan ring (120) surrounding the fan, in which system the fan, when rotating, defines an outer diameter (D) with an uppermost (U) and a lowermost (L) point, the system also comprising a heat exchange package to be cooled, **characterized in that** heat exchange package is arranged to provide a distribution, in a vertical direction of the heat exchange package from the lowermost point (L) to the uppermost point (U), of heat rejection from the heat exchange package, such that a majority of the heat is rejected in the lower half of the heat exchange package.

2. A cooling system of claim 1, **characterized in that** at least 2/3 of the heat rejected is rejected at the lower half when driving at 90 kph in ambient temperature of 25°.

3. A cooling system of claim 2, **characterized in that** more than 80% of the heat rejected is rejected at the lower half when driving at 90 kph in ambient temperature of 25°.

4. A cooling system according to any of claims 1 - 3, **characterized in that** the heat exchange package includes a first component being arranged adjacent to one of said main surfaces of the fan, additionally comprising a fan duct (130) with a first main surface which faces one of the main surfaces of the fan, said first main surface of the fan duct extending from an upper edge (140) to a lower edge (150), the system being **characterized in that** the distance from the lower edge (150) of the fan duct to the upper edge (140) is equal to or less than 80% of the diameter of the fan.

5. The cooling system (100, 400, 500) of claim 4, in which the distance from the lower edge (150) of the fan duct to the upper edge (140) is equal to or less than 50% of the diameter of the fan.

6. The cooling system (100, 400, 500) of claim 4 or 5, in which the lower edge (150) of the fan duct is located on or below the level of the lowermost point (L) in the fan radius.

7. The cooling system (100, 400, 500) of any of claims 4 - 6, in which a point (P) along the upper edge (140) of the fan duct (130) is essentially level with the upper edge (240) of the first component (220) to be cooled.

8. The cooling system (100, 400, 500) of any of claims 8 - 7, in which the fan (110) is placed in the engine room of the vehicle, between the engine and the component (240, 310, 320) to be cooled.

9. The cooling system (100, 400, 500) of any of claims 4 - 8, in which the component (240, 310, 320) to be cooled is placed in the engine room of the vehicle, between the engine and the fan (110).

10. The cooling system (100, 400, 500) of any of claims 4 - 9, in which the upper edge (140) of the fan duct (130) is at an oblique angle with respect to an imagined horizontal transversal line in the engine room.

11. The cooling system (100, 400, 500) of any of claims 4 - 10, in which the component (240, 310, 320) to be cooled is the radiator of the vehicle.

12. The cooling system (100, 400, 500) of any of claims 4 - 11, additionally comprising a second component (310, 320) to be cooled, which second component is arranged on top of the first component (240).

13. The cooling system (100, 400, 500) of any of claims 4 - 12, additionally comprising a third component (310, 320) to be cooled, which third component is arranged immediately adjacent to the first component (240) to be cooled.
